# EUROPÄISCHE PATENTSCHRIFT

(11) **EP 0 610 552 B1**
(45) Veröffentlichungstag und Bekanntmachung des Hinweises auf die Patenterteilung: **17.12.1997**
(21) Anmeldenummer: 93117067.4
(22) Anmeldetag: 21.10.1993
(51) Int. Cl.: B29D 7/01, B29C 47/76, B29B 7/84, B29K 19/00

(54) **Verfahren zur Herstellung einer korrosionsbeständigen Elastomer-Auskleidungsfolie**
Process for manufacturing a corrosion resistant elastomeric covering film
Procédé pour la fabrication d'un film pour revêtement résistant à la corrosion

(30) Priorität: 12.01.1993 DE 4300526
(43) Veröffentlichungstag der Anmeldung: 17.08.1994
(73) Patentinhaber: Keramchemie GmbH, D-56427 Siershahn (DE)
(72) Erfinder: Klein, Jochen, Dipl.-Ing., D-56626 Andernach (DE); Schwambach, Dana, Dr.-Ing., D-50735 Köln (DE); Bender, Hans Uwe, D-51503 Rösrath (DE)
(74) Vertreter: Kossobutzki, Walter, Dipl.-Ing.(FH)

(56) Entgegenhaltungen:
- EP-A- 0 490 056
- US-A- 4 356 116
- US-A- 4 430 461
- DATABASE WPI Week 8638, Derwent Publications Ltd., London, GB; AN 86-248793 & JP-A-61 176 649 (YOKOHAMA RUBBER) 8. August 1986
- DATABASE WPI Week 8640, Derwent Publications Ltd., London, GB; AN 86-262056 & JP-A-61 190 572 (MITSUI ENG. & SHIPBUILD.) 25. August 1986
- DATABASE WPI Week 8533, Derwent Publications Ltd., London, GB; AN 85-199337 & JP-A-60 124 232 (MORIYAMA) 3. Juli 1985
- DATABASE WPI Week 8920, Derwent Publications Ltd., London, GB; AN 89-148262 & JP-A-1 092 228 (YAMASHITA GUM) 11. April 1989

## Beschreibung

Die Erfindung betrifft ein Verfahren zur Herstellung einer korrosionsbeständigen, unvulkanisierten, unter Einwirkung höherer Temperaturen drucklos selbst ausvulkanisierenden Elastomer-Auskleidungsfolie durch Herstellung einer Elastomer-Mischung und Formung der Mischung zur Folie.

Elastomer-Auskleidungsfolien werden zum Schutz von metallischen Bauteilen vor dem Angriff aggressiver Medien verwendet. Entsprechende Auskleidungen finden sich in Tanks, Tankschiffen, Kesselwagen o.ä. zum Schutz vor Säuren, Laugen, Ölen, Lösungen und Lösungsmitteln.

Seit der Inbetriebnahme von Rauchgasentschwefelungsanlagen in Stein- und Braunkohlekraftwerken sind Auskleidungen von Stahlflächen in diesen Anlagen üblich. Die Auskleidungen unterliegen hierbei einem chemischen Angriff, einer Temperaturbeanspruchung und einer mechanischen Belastung. Der chemische Angriff erfolgt vorwiegend durch gelöste Salze, Gase und wässrige Kondensate. Die Temperaturbeanspruchung liegt zwischen 50 °C und 60 bis 70 °C bei den verschiedenen Einsatzbedingungen.

Die Eigenschaften und die Lebensdauer der durch die Auskleidungsfolien hergestellten Gummierungen werden sowohl durch den Kautschuk und die sonstigen Mischungsbestandteile als auch durch die Folienherstellung und -applikation vor Ort bestimmt.

In der Praxis werden bei diesen Einsatzfällen vorwiegend Naturkautschuk, Isopren-, Chloropren-, Styrol-Butadien-, Isobuten-Isopren-, Acrylnitril-Butadien-Kautschuke und EPDM für Korrosionsschutzauskleidungen allgemein verwendet. Besonders eignen sich als Montagegummierungen Halogen enthaltende Dienkautschuke. Besonders bevorzugt sind chlorierte oder bromierte Butylkautschuke, die einen geringen Diffusions- und Permeationskoeffizienten gegenüber Wasser, Wasserdampf, SO₂, HCl und anderen Gasen und eine gute Beständigkeit gegen aggressive Medien aufweisen. Darüber hinaus sind diese Kautschuke aufgrund ihres thermisch-mechanischen Alterungsverhaltens sowie ihrer Neigung zur Selbstvulkanisation günstig.

Es ist bekannt, Elastomer-Auskleidungsfolien in mehreren Ausgangs-Vulkanisationszuständen einzusetzen.

Unvulkanisierte Folien sind aufgrund ihrer geringen Plastizität bei der Applikation vorteilhaft und bedingen niedrige Herstellungskosten. Unter Einwirkung der Temperatur im Einsatzfall, beispielsweise durch Rauchgase, vulkanisieren diese Folien selbst. Es zeigt sich, daß die unvulkanisiert aufgebrachten Folien gegenüber vulkanisiert aufgebrachte Folien erhebliche Nachteile im Diffusions- und Permeationsverhalten, bei den mechanischen Werten der eingesetzten Gummierung sowie bezüglich der elektrischen Durchschlagfestigkeit aufweisen.

Um diese Nachteile zu vermeiden, sind die Auskleidungsfolien im vorvulkanisierten oder ausvulkanisierten Zustand aufgebracht worden. Hierdurch erhöhen sich naturgemäß die Herstellungskosten. Für die Vulkanisation von Butyl-Auskleidungsfolien im Autoklaven ist eine Vulkanisationsdauer von 90 min und eine Vulkanisationstemperatur von 138 °C typisch. Zusätzlich müssen Aufheiz- und Abkühlzeiten berücksichtigt werden. Für die Vorvulkanisation von halogenierten Butylqualitäten muß mit Heizzeiten von 6 bis 10 Stunden bei 100 °C (ohne Berücksichtigung der Aufheiz- und Abkühlzeit) gerechnet werden. Problematisch für den Einsatz von vorvulkanisierten Folien ist die Schwierigkeit, eine reproduzierbare Einstellung des geforderten Vulkanisationszustandes für die erforderlichen großvolumigen Teile (Rollenware) zu erzielen.

Der Einsatz vorvulkanisierten und vulkanisierten Materials verursacht weiterhin Nachteile bei der Applikation (erhöhte Steifigkeit, deformierte Rollenware) und für die Verkleb- und Verschweißbarkeit, was zu verschlechterten Schälwiderstandswerten bei der Verklebung führt. Die Gummi-Metall-Bindung und die Gummi-Gummi-Bindung erweist sich für den Einsatz von vulkanisierten oder vorvulkanisierten Folien als Schwachstelle.

Es ist versucht worden, die Nachteile des Einsatzes von unvulkanisierten Folien und vor- bzw. ausvulkanisierten Folien durch mehrschichtige Folien, bestehend aus einer chemisch beständigen Oberschicht und einer verklebefreundlichen Unterseite, zu vermeiden. Neben erhöhten Herstellungskosten bleiben die Schwierigkeiten bei der Einstellung eines reproduzierbaren Vulkanisationszustandes der Unterseite und die erschwerte Applikation an geometrisch komplizierten Bauteilen erhalten.

Das technische Problem für die Verwendung von Auskleidungsfolien besteht somit generell darin, daß immer ein Kompromiß erforderlich ist, da angestrebte Vorteile nur unter Inkaufnahme gravierender Nachteile erreichbar sind.

Ausgehend von diesem Problem ist das erfindungsgemäße Verfahren der eingangs erwähnten Art dadurch gekennzeichnet, daß die unvulkanisierte Elastomer-Mischung vor und/oder während der Formung einem eine Entgasung der Elastomer-Mischung bewirkenden Unterdruck ausgesetzt wird.

Überraschenderweise läßt sich mit dieser relativ einfachen Maßnahme erreichen, daß die Vorteile des Einsatzes unvulkanisierter Folien erzielbar sind, ohne die bisher beobachteten Nachteile unvulkanisierter Folien in Kauf nehmen zu müssen. Der Erfindung liegt die Erkenntnis zugrunde, daß die bisher beobachteten Nachteile bei der Verwendung unvulkanisiert aufgebrachter Auskleidungsfolien dadurch entstehen, daß bei der drucklosen Ausvulkanisierung der unvulkanisiert aufgebrachten Folie in der Folie enthaltene Gasbläschen expandieren und so zu einer Porösität führen, die die mechanischen und elektrischen Eigenschaften der Folie erheblich verschlechtern. Dies gilt insbesondere für halogenierte Dienkautschuke, insbesondere chlorierte oder bromierte Butylkautschuke, die materialbedingt geringe Diffusions- und Permeationskoeffizienten aufweisen und daher für die Expansion der Gasbläschen besonders anfällig sind.

Die Evakuierung der Elastomer-Mischung kann bei der Mischungsherstellung in einem Kreiselmischer oder Kneter und/oder bei der Formung in einem Vakuumextruder erfolgen.

Die geformten Elastomerfolien werden in üblicher Weise über eine Klebeschicht auf das mit Primer und Bindemittel vorbereitete Metall aufgebracht. Unmittelbar nach der Applikation kann die für die Anlage übliche Temperatur- und Medienbeaufschlagung erfolgen. Unter dem Einfluß von Temperatur und Zeit vulkanisiert das Elastomer drucklos und aufgrund der Blasenfreiheit ohne merkliche Volumenzunahme.

Die mit dem erfindungsgemäßen Verfahren hergestellte Folie vereint die guten Applikationseigenschaften und die Vorteile bei der Verkleb- und Verschweißbarkeit von unvulkanisiertem Material mit den hervorragenden Alterungs-, Chemikalien- und Diffusionsbeständigkeiten von blasenfreien, halogenierten Butyl-Kautschuken.

Aufgrund der Entgasung liegen die Schälwiderstandswerte von Gummi-Metall-Verbindungen und Gummi-Gummi-Verbindungen, einschließlich deren Beständigkeit gegenüber chemischen und thermischen Einflüssen und der Werte für die elektrische Durchschlagsfestigkeit deutlich über den entsprechenden Werten von nichtentgastem Material.

### Beispiel

Für die Beschichtung von Stahl wurde eine Kautschukmischung mit folgender Rahmenrezeptur angewendet (phr = parts per hundred parts rubber):

| | |
|---|---|
| Brombutyl | 100 phr |
| Elastomerweichmacher | 10 phr |
| Ruß | 95 phr |
| Verarbeitungshilfsmittel | 5 phr |
| Metalloxid | 5 phr |
| Beschleuniger | 5 phr |

Im Anschluß an die Mischungsherstellung im Innenmischer erfolgte die Folienherstellung (A) auf einer Rollerhead-Anlage mit Entgasungsaggregat (Extruder: L= 20 d, d= 150 mm, Vakuumpumpe: Q = 630 m/h, 14 hPa Vakuum). Die Foliendicke betrug 4 mm.

Im Vergleich dazu wurde eine ohne Entgasung hergestellte Folie (B) herangezogen.

Es werden die mechanischen Kennwerte, das Alterungsverhalten bei 70 °C, die Deionatquellung (70 °C), der Schälwiderstand und die Durchschlagfestigkeit von Folie A, B (unvulkanisiert) und Folie C (nicht entgast, vulkanisiert: 143 °C, 90 min) verglichen.

| Vulkanisation: 90 min, 143 °C | Folie A | Folie B | Folie C |
|---|---|---|---|
| Härte (Shore A) DIN 53 505 | 57 | 57 | 57 |
| Festigkeit (MPa) | 8,4 | 7,8 | 8,4 |
| Dehnung (%) DIN 53 504 | 390 | 440 | 390 |
| Weiterreißwiderstand (Graves ohne Schnitt) (N/mm) in Anlehnung an DIN 53 515 | 31,0 | 27,6 | 31,0 |
| Alterung der unvulkanisierten Folien bei 100 °C, 8 Wochen Endfestigkeit bezogen auf Festigkeit, ermittelt nach Pressenheizung (90 min, 143 °C) (%) | 71 | 60 | 73 |
| Enddehnung bezogen auf Dehnung, ermittelt nach Pressenheizung (%) | 72 | 48 | 70 |

| Quellung, 70 °C, Deionat, 12 Wochen | | | |
|---|---|---|---|
| Volumenzunahme (%) | 2,1 | 13,5 | 2,1 |
| Massezunahme | 2,9 | 2,8 | 2,8 |
| Schälwiderstand in Anlehnung an DIN 53 531 Vulkanisation: 90 min, 143 °C (N/mm) | 9,8 | 7,4 | 5,2 |
| | Riß im Gummi | | Riß im Kleber |
| Durchschlagspannung (kV/mm) an 4-mm-Platte, A, B unvulk. C vulk. | 5,7 | 4,8 | 4,9 |
| spez. Durchgangswiderstand (Ω cm) | 4,5x10¹³ | 3,5x10¹¹ | 3,7x10¹¹ |

## Patentansprüche

1. Verfahren zur Herstellung einer korrosionsbeständigen, unvulkanisierten, unter Einwirkung höherer Temperaturen drucklos selbst ausvulkanisierenden Elastomer-Auskleidungsfolie durch Herstellung einer Elastomer-Mischung und Formung der Mischung zur Folie, **dadurch gekennzeichnet**, **daß** die Elastomer-Mischung vor und/oder während der Formung einem eine Entgasung der Elastomer-Mischung bewirkenden Unterdruck ausgesetzt wird.

2. Verfahren nach Anspruch 1, gekennzeichnet durch die Verwendung einer einen halogenierten Dienkautschuk enthaltenden Elastomer-Mischung.

3. Verfahren nach Anspruch 2, gekennzeichnet durch die Verwendung einer chlorierte oder bromierte Butylkautschuke enthaltenden Elastomer-Mischung

4. Verfahren nach Anspruch 3, gekennzeichnet durch die Verwendung einer Elastomer-Mischung mit folgender Zusammensetzung:
| | |
|---|---|
| Halogenierter Butylkautschuk | 100 phr |
| Elastomerweichmacher | 1 - 40 vorzugsweise 10 phr |
| Ruß | 10 - 200 vorzugsweise 95 phr |
| Verarbeitungshilfsmittel | 0,5 - 15 vorzugsweise 5 phr |
| Metalloxid | 0,5 - 30 vorzugsweise 5 phr |
| Beschleuniger | 1 - 10 vorzugsweise 5 phr |

## Claims

1. Process for the manufacture of a corrosion-resistant, unvulcanised elastomeric liner which is completely self-vulcanising at normal pressure and elevated temperatures by producing an elastomer mixture and moulding the mixture to form a film, characterised in that the elastomer mixture is subjected to negative pressure resulting in degassing of the elastomer mixture before and/or during the moulding process.

2. Process according to claim 1, characterised by the use of an elastomer mixture containing a halogenated diene rubber.

3. Process according to claim 2, characterised by the use of an elastomer mixture containing chlorinated or brominated butyl rubbers.

4. Process according to claim 3, characterised by the use of an elastomer mixture with the following composition:
| | |
|---|---|
| halogenated butyl rubber | 100 phr |
| elastomeric plasticiser | 1 - 40 preferably 10 phr |
| carbon black | 10 - 200 preferably 95 phr |
| processing aid | 0.5 - 15 preferably 5 phr |
| metal oxide | 0.5 - 30 preferably 5 phr |
| accelerator | 1 - 10 preferably 5 phr. |

## Revendications

1. Procédé de préparation d'une feuille de revêtement élastomère résistant à la corrosion, non vulcanisée, s'auto-vulcanisant sans pression sous l'action de températures élevées, par préparation d'un mélange élastomère et formage du mélange en feuille, caractérisé en ce que le mélange élastomère est soumis avant et/ou après le formage à une dépression provoquant un dégazage du mélange élastomère.

2. Procédé selon la revendication 1, caractérisé par l'utilisation d'un mélange élastomère contenant un caoutchouc diène halogene.

3. Procédé selon la revendication 2, caractérisé par l'utilisation d'un mélange élastomère contenant des caoutchoucs butyle chlorés ou bromés.

4. Procédé selon la revendication 3, caractérisé par l'utilisation d'un mélange élastomère ayant la composition suivante:
| | |
|---|---|
| Caoutchouc butyle halogéné | 100 parties en poids (pp) |
| Plastifiant élastomère | 1-40, de préférence 10 pp |
| Noir de fumée | 10-200, de préférence 95 pp |
| Adjuvant de traitement | 0,5-15, de préférence 5 pp |
| Oxyde métallique | 0,5-30, de préférence 5 pp |
| Accélérateur | 1-10, de préférence 5 pp. |
